(19) Europäisches Patentamt
European Patent Office
Office européen des brevets

(11) EP 4 641 457 A1

(12) EUROPEAN PATENT APPLICATION

(43) Date of publication:
29.10.2025 Bulletin 2025/44

(51) International Patent Classification (IPC):
G06Q 10/047 (2023.01)    G01C 21/34 (2006.01)

(21) Application number: 24223382.3

(52) Cooperative Patent Classification (CPC):
G06Q 10/047; G01C 21/3469; G06Q 50/40

(22) Date of filing: 27.12.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.04.2024 TW 113115348

(71) Applicant: APh ePower Co., Ltd.
Kaohsiung City 821 (TW)

(72) Inventors:
• LAN, Yi-Chia
  821 Kaohsiung City (TW)
• HUANG, Yi-Yun
  821 Kaohsiung City (TW)
• SU, Hsiu-Hsien
  821 Kaohsiung City (TW)

(74) Representative: Becker, Eberhard
Becker Kurig & Partner
Patentanwälte mbB
Bavariastraße 7
80336 München (DE)

(54) **CARBON EMISSION MANAGEMENT SYSTEM AND MANAGEMENT METHOD THEREOF**

(57) Provided are a carbon emission management system (100) and a management method thereof. A route optimization calculation module (102) calculates a driving route from a first destination to a second destination based on at least one of a vehicle type, a minimum driving distance, and a minimum driving time. A carbon emission calculation module (104) calculates a total carbon emission of each candidate vehicle from a location thereof to an end of the driving route based on the driving route, carbon emission coefficients of the multiple candidate vehicles, and the locations thereof, and selects one of the multiple candidate vehicles as an assigned vehicle for driving the driving route based on the total carbon emission of each candidate vehicle.

FIG. 1

Processed by Luminess, 75001 PARIS (FR)

EP 4 641 457 A1

Description

BACKGROUND

Technical Field

The disclosure relates to an electronic device, and in particular to a carbon emission management system and its management method.

Description of Related Art

Challenges faced by the current logistics industry include the inability to effectively quantify carbon emissions, the lack of optimal route planning for multi-point transportation, and the inability to create incentives for carbon reduction, resulting in inefficient driving routes and high carbon emissions for logistics personnel. Therefore, how to provide efficient and low-carbon options so that the logistics industry can more effectively cope with global net-zero carbon emissions is an important issue.

SUMMARY

The disclosure provides a carbon emission management system and a management method thereof, which can provide efficient and low-carbon options and help achieve the goal of net-zero carbon emissions.

The carbon emission management system of the disclosure includes a route optimization calculation module and a carbon emission calculation module. The route optimization calculation module calculates a driving route from a first destination to a second destination based on at least one of a vehicle type, a minimum driving distance, and a minimum driving time. The carbon emission calculation module calculates a total carbon emission of each candidate vehicle from a location thereof to an end of the driving route based on the driving route, carbon emission coefficients of the multiple candidate vehicles, and the locations thereof, and selects one of the multiple candidate vehicles as an assigned vehicle for driving the driving route based on the total carbon emission of each candidate vehicle.

In an embodiment of the disclosure, the route optimization calculation module further updates the driving route based on a third destination added by a destination adding instruction, and the carbon emission calculation module further calculates the total carbon emission of each candidate vehicle from the location thereof to the end of the updated driving route based on the carbon emission coefficients of the multiple candidate vehicles and the locations thereof.

In an embodiment of the disclosure, the carbon emission management system is a logistics management system. The route optimization calculation module calculates the driving route based on an order instruction. The route optimization calculation module further adjusts standby locations of the multiple candidate vehicles based on historical order information.

In an embodiment of the disclosure, the destination adding instruction is a consolidation instruction.

In an embodiment of the disclosure, the carbon emission management system includes a storage unit storing the historical order information, map information, historical driving route information, and vehicle carbon emission coefficient information.

In an embodiment of the disclosure, the carbon emission calculation module further selects the assigned vehicle based on available driving ranges of the multiple candidate vehicles.

The disclosure further provides a management method of a carbon emission management system, which includes the following steps. The driving route from the first destination to the second destination is calculated based on at least one of the vehicle type, the minimum driving distance, and the minimum driving time. The total carbon emission of each candidate vehicle from the location thereof to the end of the driving route is calculated based on the driving route, the carbon emission coefficients of the multiple candidate vehicles, and the locations thereof. One of the multiple candidate vehicles is selected as the assigned vehicle for driving the driving route based on the total carbon emission of each candidate vehicle.

In an embodiment of the disclosure, the management method of the carbon emission management system includes the following steps. The driving route is updated based on the third destination added by the destination adding instruction. The total carbon emission of each candidate vehicle from the location thereof to the end of the updated driving route is calculated based on the carbon emission coefficients of the multiple candidate vehicles and the locations thereof.

In an embodiment of the disclosure, the carbon emission management system is a logistics management system, and the management method of the carbon emission management system includes: calculating the driving route based on an order instruction, and adjusting the standby locations of the multiple candidate vehicles based on the historical order information.

In an embodiment of the disclosure, the destination adding instruction is a consolidation instruction.

In an embodiment of the disclosure, the management method of the carbon emission management system includes: selecting the assigned vehicle based on the available driving ranges of the multiple candidate vehicles.

Based on the above, the route optimization calculation module of the embodiments of the disclosure may calculate the driving route from the first destination to the second destination based on at least one of the vehicle type, the minimum driving distance, and the minimum driving time. The carbon emission calculation module may calculate the total carbon emission of each candidate vehicle from the location thereof to the end of the driving route based on the driving route, the carbon emission coefficient of the multiple candidate vehicles, and the locations thereof, and select one of the multiple candidate vehicles as the assigned vehicle for driving the driving route based on the total carbon emission of each candidate vehicle. In this way, the total carbon emission of the candidate vehicle is calculated based on the driving route, the carbon emission coefficient of the candidate vehicle, and the location, and the assigned vehicle is selected based on the total carbon emission of the candidate vehicle, which can provide efficient and low-carbon options, thereby contributing to achieving the goal of net-zero carbon emissions.

In order to make the foregoing features and advantages of the disclosure more comprehensible, embodiments are given below and described in detail with reference to the accompanying drawings.

## BRIEF DESCRIPTION OF THE DRAWINGS

FIG. 1 is a schematic diagram of a carbon emission management system according to an embodiment of the disclosure.
FIG. 2 is a flow chart of a management method of a carbon emission management system according to an embodiment of the disclosure.
FIG. 3 is a flow chart of the management method of the carbon emission management system according to another embodiment of the disclosure.

## DESCRIPTION OF THE EMBODIMENTS

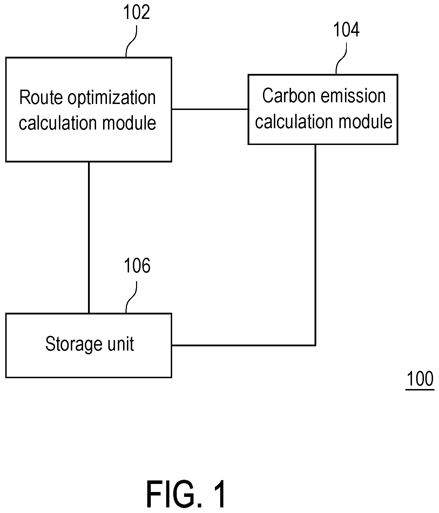

FIG. 1 is a schematic diagram of a carbon emission management system according to an embodiment of the disclosure. Referring to FIG. 1, a carbon emission management system 100 may include a route optimization calculation module 102, a carbon emission calculation module 104, and a storage unit 106. The route optimization calculation module 102 is coupled to the carbon emission calculation module 104 and the storage unit 106. The carbon emission calculation module 104 is also coupled to the storage unit 106. In the embodiment, the route optimization calculation module 102 and the carbon emission calculation module 104 may be implemented by, for example, a processor or a microcontroller, and the storage unit 106 may be implemented by, for example, a non-volatile memory, but the disclosure is not limited thereto.

The route optimization calculation module 102 may calculate a driving route from a first destination to a second destination based on at least one of a vehicle type, a minimum driving distance, and a minimum driving time. For example, when the vehicle is a scooter, the driving route of the scooter moving from the first destination to the second destination may be calculated based on at least one of the minimum driving distance and the minimum driving time of the scooter. Similarly, when the vehicle is a car, the driving route of the car moving from the first destination to the second destination may also be calculated based on at least one of the minimum driving distance and the minimum driving time of the car. In the embodiment, in addition to scooters and cars, the vehicle type may also be other vehicles, such as bicycles, but the disclosure is not limited thereto. Alternatively, the vehicle type may also refer to the power form of the vehicle, such as a fuel vehicle, a hybrid vehicle, or an electric vehicle.

The carbon emission calculation module 104 may calculate a total carbon emission of each candidate vehicle from a location thereof to an end of the driving route based on the driving route, carbon emission coefficients of the multiple candidate vehicles, and the locations thereof, and select one of the candidate vehicles as an assigned vehicle for driving the driving route based on the total carbon emission of each candidate vehicle. Furthermore, the carbon emission calculation module 104 may target each candidate vehicle located at different locations, calculate the total carbon emission generated from the location of each candidate vehicle to the second destination through the driving route calculated by the carbon emission calculation module 104 respectively, and select an assigned vehicle based on the total carbon emission of each candidate vehicle, for example, select a candidate vehicle with the lowest total carbon emission as the assigned vehicle.

It is worth noting that in the case where the candidate vehicles are all similar vehicles (for example, the vehicles are all scooters or are all cars, but the power forms are different or the same), the driving route of each candidate vehicle calculated by the carbon emission calculation module 104 may be the same; while in the case where the candidate vehicles include different vehicles (for example, the vehicles include a scooter and a car), the driving route corresponding to each candidate vehicle calculated by the carbon emission calculation module 104 may be different. The carbon emission calculation module 104 may calculate the total carbon emission for the driving route corresponding to each candidate vehicle, and select the assigned vehicle and the corresponding driving route thereof accordingly.

In addition, in some embodiments, the carbon emission calculation module 104 may further select the assigned vehicle based on an available driving range of the candidate vehicle. For example, when the remaining electric energy or remaining fuel of the candidate vehicle is insufficient to complete the driving route, the carbon emission calculation module 104 may exclude this candidate vehicle from the selection. In the embodiment, the remaining electric energy or remaining fuel of the candidate vehicle may be monitored, for example, by a monitor disposed on the candidate vehicle, and transmitted to the carbon emission calculation module 104. The carbon emission calculation module 104 may, for example, receive monitoring information from the monitor through a wireless transmission module (not shown, which may be a cellular communication module, but the disclosure is not limited thereto), and send back location information of a charging station or gas station to the candidate vehicle when the remaining electric energy or remaining fuel of the candidate vehicle is insufficient. In the embodiment, the location information of the charging station or gas station may be stored in the storage unit 106, for example, and may be obtained from map information stored in the storage unit 106. In addition to storing the map information, the storage unit 106 may further store historical driving route information, vehicle carbon emission coefficient information of the candidate vehicle, and location information thereof. In the embodiment, the historical driving route information may be, for example, the driving route previously calculated by the route optimization calculation module 102 and factors such as the type and driving time of the corresponding assigned vehicle thereof. By storing the historical driving route information to the storage unit 106, the accuracy and efficiency of route planning can be continuously optimized.

Furthermore, when the candidate vehicle is a fuel vehicle, a total carbon emission CEf of the candidate vehicle may be calculated, for example, according to the following Formula (1).

$$CEf = \frac{Oef}{FE} \times D \quad (1)$$

In the formula, Oef is an emission coefficient of a fuel scooter, which denotes the amount of greenhouse gas emissions generated by burning fuel, FE is a fuel efficiency, which denotes the maximum number of kilometers that a fuel vehicle or a hybrid vehicle may travel per liter of gasoline, and D is a total mileage traveled.

When the candidate vehicle is a hybrid vehicle, a total carbon emission CEh of the candidate vehicle may be calculated, for example, according to the following Formula (2).

$$CEh = \left[ (D - EDh) \times \frac{Oef}{FE} \right] + \left[ EDh \times \frac{Eef}{EE} \right] \quad (2)$$

In the formula, EDh is the driving mileage of the hybrid vehicle, which may be set to 35km, for example, but the disclosure is not limited thereto, and may be set to different values corresponding to different vehicles, and Eef is an electricity carbon emission coefficient, which denotes the amount of greenhouse gas emissions generated per kilowatt-hour of electricity sold by public power utilities, EE is the electric efficiency, which is the maximum number of kilometers that hybrid or electric vehicles may travel using each kilowatt-hour of electricity.

When the candidate vehicle is an electric vehicle, a total carbon emission CEe of the candidate vehicle may be calculated, for example, according to the following Formula (3).

$$CEe = \frac{Eef}{EE} \times D \quad (3)$$

In this way, the total carbon emission of the candidate vehicle is calculated based on the driving route, the carbon emission coefficient of the candidate vehicle, and the location, and the assigned vehicle is selected based on the total carbon emission of the candidate vehicle, which can provide efficient and low-carbon options, thereby contributing to achieving the goal of net-zero carbon emissions.

In addition, in other embodiments, the route optimization calculation module 102 may further update the driving route based on a third destination added by a destination adding instruction, for example, when the third destination is added, the driving route from the first destination to the third destination and then to the second destination is recalculated based on at least one of the vehicle type, the minimum driving distance, and the minimum driving time, in which the moving sequence of the first destination, the second destination, and the third destination is not limited thereto, and may be changed according to the setting of the destination adding instruction. Similarly, the carbon emission calculation module 104 may calculate the total carbon emission of each candidate vehicle from the location thereof to the end of the updated driving route based on the carbon emission coefficients of the multiple candidate vehicles and the locations thereof.

In some embodiments, the carbon emission management system may be applied to logistics management (logistics management systems such as food delivery and instant express delivery), and the route optimization calculation module 102 may calculate the driving route based on an order instruction, for example, receive the order instruction from a mobile phone of a customer, and calculate the driving route of the vehicle (which may be, for example, a scooter, a car, or a vehicle with different power forms, but the disclosure is not limited thereto) from a pickup location (first destination) indicated by the order instruction to a delivery location (second destination) according to the method in the foregoing embodiment. Since the implementation method of calculating the driving route is explained in the foregoing embodiment, details will not be repeated here.

Similarly, the carbon emission calculation module 104 may calculate the total carbon emission generated from the location of each logistics personnel to the delivery location (second destination) through the driving route calculated by the carbon emission calculation module 104 for each logistics personnel (candidate vehicle) located in different locations, and select the assigned logistics personnel (assigned vehicle) based on the total carbon emission corresponding to each logistics personnel. For example, the logistics personnel (candidate vehicle) with the lowest total carbon emission is selected as the assigned logistics personnel (assigned vehicle). When the assigned vehicle is an unmanned vehicle, the carbon emission calculation module 104 may directly control the movement of the assigned vehicle based on the driving route to carry customers or goods to the delivery location.

For example, as shown in Table 1 below, the carbon emission calculation module 104 may select a logistics personnel H with the lowest total carbon emission as the assigned logistics personnel for transporting goods.

Table 1

| Logistics personnel | Vehicle type | Fuel mileage (km) | Electric mileage (km) | Driving time(min) | Fuel carbon emission coefficient (kg $CO_2$e/L) | Electricity carbon emission coefficient (kg $CO_2$e/kWh) | Total carbon emission (kg $CO_2$e) |
|---|---|---|---|---|---|---|---|
| A | Fuel vehicle | 8 | | 30 | 3.01 | | 24.08 |
| B | Fuel vehicle | 10 | | 15 | 3.01 | | 30.1 |
| C | vehicle | 22 | | 43 | 3.01 | | 66.22 |
| D | Hybrid vehicle | 2 | 7 | 55 | 3.01 | 0.495 | 9.485 |
| E | Hybrid vehicle | 5 | 6 | 12 | 3.01 | 0.495 | 18.02 |
| F | Hybrid vehicle | 10 | 10 | 28 | 3.01 | 0.495 | 35.05 |
| G | Hybrid vehicle | 3 | 35 | 30 | 3.01 | 0.495 | 26.355 |
| H | Electric vehicle | | 15 | 60 | | 0.495 | 7.425 |
| I | Electric vehicle | | 40 | 30 | | 0.495 | 19.8 |
| J | Electric vehicle | | 28 | 25 | | 0.495 | 13.86 |

In addition, in some embodiments, the route optimization calculation module 102 may further receive a consolidation instruction (destination adding instruction) from the customer mobile phone of the customer, and update the driving route based on the destination (third destination) corresponding to the consolidation instruction. The implementation method of the route optimization calculation module 102 updating the driving route is as described in the foregoing embodiment, details will not be repeated here.

For example, as shown in Table 2 below, when the customer agrees to consolidate orders and issues the consolidation instruction, the carbon emission calculation module 104 may select a logistics personnel D with the lowest total carbon emission as the assigned logistics personnel for transporting goods.

Table 2

| Logistics personnel | Vehicle type | Fuel mileage (km) | Electric mileage (km) | Multi-trip mileage (km) | Driving time(min) | Fuel carbon emission coefficient (kg $CO_2$e/L) | Electricity carbon emission coefficient (kg $CO_2$e/kWh) | Total carbon emission (kg $CO_2$e) |
|---|---|---|---|---|---|---|---|---|
| A | Fuel vehicle | 8 | | 5 | 35 | 3.01 | | 39.13 |
| B | Fuel vehicle | 10 | | 22 | 25 | 3.01 | | 96.32 |
| C | Fuel vehicle | 22 | | 18 | 48 | 3.01 | | 120.4 |
| D | Hybrid vehicle | 2 | 7 | 2 | 60 | 3.01 | 0.495 | 15.505 |
| E | Hybrid vehicle | 5 | 6 | 35 | 16 | 3.01 | 0.495 | 123.37 |
| F | Hybrid vehicle | 10 | 10 | 12 | 38 | 3.01 | 0.495 | 71.17 |
| G | Hybrid vehicle | 3 | 35 | 6 | 40 | 3.01 | 0.495 | 44.415 |
| H | Electric vehicle | | 15 | 17 | 68 | | 0.495 | 15.84 |
| I | Electric vehicle | | 40 | 24 | 45 | | 0.495 | 31.68 |
| J | Electric vehicle | | 28 | 12 | 37 | | 0.495 | 19.8 |

Since the consolidation instruction may prolong the waiting time for the customer, in some embodiments, the route optimization calculation module 102 may provide corresponding rewards to the customer who issued the consolidation instruction, for example, a reward notification may be sent through the wireless transmission module to inform the customer that cash rebates or fee reductions are provided, but the disclosure is not limited thereto. In the embodiment, the rewards provided to the customer may be calculated based on the multi-trip mileage after order consolidation. The more multi-trip mileage is covered, the more rewards are given. In some embodiments, the average carbon emission of all logistics personnel minus the carbon emission of the assigned logistics personnel is equal to a green benefit carbon reduction amount. If the green benefit carbon reduction amount is less than 0, then no reward is provided. If the reward is a cash rebate, reference may be made to the internal carbon pricing of the company, or the domestic and international carbon credit public prices, in order to estimate the cash rebate.

In some embodiments, the carbon emission calculation module 104 may further consider the delivery time when selecting the assigned logistics personnel (assigned vehicle). For example, in the embodiment of Table 2, if the consolidation instruction from the customer further restricts the delivery within 30 minutes, then the carbon emission calculation module 104 may instead select a logistics personnel B as the assigned logistics personnel for transporting goods.

In some embodiments, in addition to storing map information, historical driving route information, and vehicle carbon emission coefficient information, the storage unit 106 may further store historical order information. The historical order information may include, for example, the order time, the pickup location, and the delivery location, but the disclosure is not limited thereto. By storing the historical driving route information and the historical order information to the storage unit 106, the accuracy and efficiency of route planning of the logistics management system can be continuously optimized. For example, the route optimization calculation module 102 may learn the order situation of a specific location at a specific time based on the historical order information stored in the storage unit 106, for example, restaurants near schools or companies usually have a high volume of orders during meal times. The route optimization calculation module 102 may adjust a standby location of the logistics personnel (candidate vehicle) based on the historical order information, for example, location information is provided to logistics personnel (candidate vehicle) through the wireless transmission module to inform the logistics personnel to go to restaurants near schools or companies to be on standby, so that logistics delivery can be carried out more efficiently. In addition, in other embodiments, after the logistics personnel (candidate vehicle) goes to the standby location based on the location information provided by the route optimization calculation module 102 and turns off the engine, the route optimization calculation module 102 may provide rewards (such as bonuses, but the disclosure is not limited thereto) to the on-call logistics personnel on standby to encourage the logistics personnel to participate in carbon reduction measures.

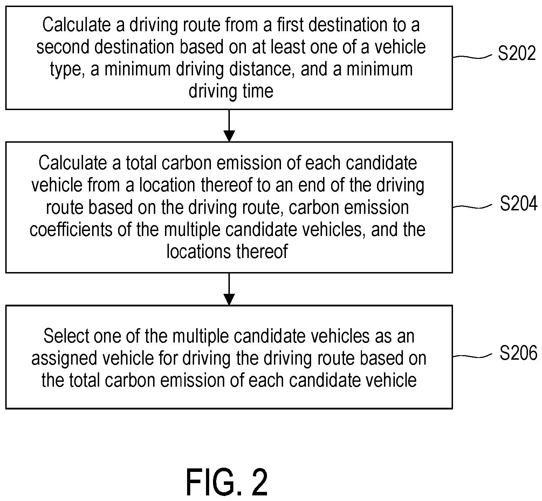

FIG. 2 is a flow chart of a management method of a carbon emission management system according to an embodiment of the disclosure. As may be seen from the foregoing embodiments, the management method of the carbon emission management system may include the following steps. First, the driving route from the first destination to the second destination is calculated based on at least one of the vehicle type, the minimum driving distance, and the minimum driving time (Step S202). In the situation that the carbon emission management system is applied to logistics management (logistics management systems such as food delivery and instant express delivery), the driving route of the vehicle (which may be, for example, a scooter, a car, or a vehicle with different power forms, but the disclosure is not limited thereto) from a pickup location (first destination) indicated by the order instruction to a delivery location (second destination) may be calculated based on at least one of the vehicle type, the minimum driving distance, and the minimum driving time. Next, the total carbon emission of each candidate vehicle from the location thereof to the end of the driving route is calculated based on the driving route, the carbon emission coefficients of the multiple candidate vehicles, and the locations thereof (Step S204). Then, one of the multiple candidate vehicles is selected as the assigned vehicle for driving the driving route based on the total carbon emission of each candidate vehicle (Step S206). In the situation that the carbon emission management system is applied to logistics management, the assigned vehicle is for transporting goods.

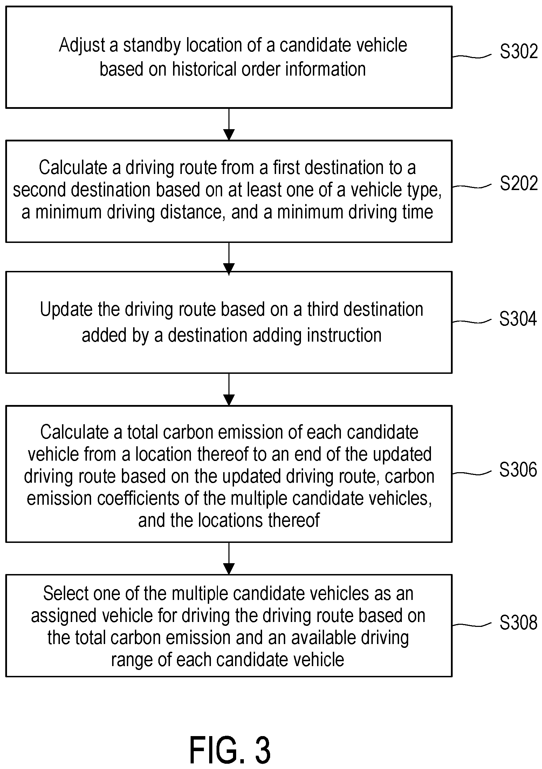

FIG. 3 is a flow chart of the management method of the carbon emission management system according to an embodiment of the disclosure. The difference between this embodiment and the embodiment of FIG. 2 is that, before Step S202, the standby location of the candidate vehicle may be adjusted based on the historical order information (Step S302) to improve the efficiency of logistics delivery. In addition, after Step S202, the destination adding instruction is received, and the driving route is updated based on the third destination added by the destination adding instruction (Step S304). In the situation that the carbon emission management system is applied to logistics management, the destination adding instruction may be the consolidation instruction. In addition, in Step S306, the total carbon emission of each candidate vehicle from the location thereof to the end of the updated driving route is calculated based on the updated driving route, the carbon emission coefficients of the multiple candidate vehicles, and the locations thereof. In Step S308, one of the multiple candidate vehicles may be selected as the assigned vehicle for driving the driving route based on the total carbon emission and available driving range of each candidate vehicle, in which when the available driving range of the candidate vehicle is lower than the mileage required to complete the driving route, the candidate vehicle is excluded from the selection.

In summary, the route optimization calculation module of the embodiments of the disclosure may calculate the driving route from the first destination to the second destination based on at least one of the vehicle type, the minimum driving distance, and the minimum driving time. The carbon emission calculation module may calculate the total carbon emission of each candidate vehicle from the location thereof to the end of the driving route based on the driving route, the carbon emission coefficient of the multiple candidate vehicles, and the locations thereof, and select one of the multiple candidate vehicles as the assigned vehicle for driving the driving route based on the total carbon emission of each candidate vehicle. In this way, the total carbon emission of the candidate vehicle is calculated based on the driving route, the carbon emission coefficient of the candidate vehicle, and the location, and the assigned vehicle is selected based on the total carbon emission of the candidate vehicle, which can provide efficient and low-carbon options, thereby contributing to achieving the goal of net-zero carbon emissions.

**Claims**

1. A carbon emission management system (100), comprising:

   a route optimization calculation module (102) calculating a driving route from a first destination to a second destination based on at least one of a vehicle type, a minimum driving distance, and a minimum driving time; and
   a carbon emission calculation module (104) calculating a total carbon emission of each candidate vehicle from a location thereof to an end of the driving route based on the driving route, carbon emission coefficients of the plurality of candidate vehicles, and the locations thereof, and selecting one of the candidate vehicles as an assigned vehicle for driving the driving route based on the total carbon emission of each of the candidate vehicles.

2. The carbon emission management system (100) as claimed in claim 1, wherein the route optimization calculation module (102) further updates the driving route based on a third destination added by a destination adding instruction, and the carbon emission calculation module (104) further calculates the total carbon emission of each of the candidate vehicles from the location thereof to an end of the updated driving route based on the carbon emission coefficients of the candidate vehicles and the locations thereof.

3. The carbon emission management system (100) as claimed in claim 2, wherein the carbon emission management system (100) is a logistics management system, the route optimization calculation module (102) calculates the driving route based on an order instruction, and the route optimization calculation module (102) further adjusts standby locations of the candidate vehicles based on historical order information.

4. The carbon emission management system (100) as claimed in claim 3, wherein the destination adding instruction is a consolidation instruction.

5. The carbon emission management system (100) as claimed in claim 3, comprising:
a storage unit storing the historical order information, map information, historical driving route information, and vehicle carbon emission coefficient information.

6. The carbon emission management system (100) as claimed in claim 1, wherein the carbon emission calculation module (104) further selects the assigned vehicle based on available driving ranges of the candidate vehicles.

7. A management method of a carbon emission management system (100), comprising:

calculating a driving route from a first destination to a second destination based on at least one of a vehicle type, a minimum driving distance, and a minimum driving time;
calculating a total carbon emission of each candidate vehicle from a location thereof to an end of the driving route based on the driving route, carbon emission coefficients of the plurality of candidate vehicles, and the locations thereof; and
selecting one of the candidate vehicles as an assigned vehicle for driving the driving route based on the total carbon emission of each of the candidate vehicles.

8. The management method of the carbon emission management system (100) as claimed in claim 7, comprising:

updating the driving route based on a third destination added by a destination adding instruction; and
calculating the total carbon emission of each of the candidate vehicles from the location thereof to an end of the updated driving route based on the carbon emission coefficients of the candidate vehicles and the locations thereof.

9. The management method of the carbon emission management system (100) as claimed in claim 8, wherein the carbon emission management system (100) is a logistics management system, and the management method of the carbon emission management system (100) comprises:

calculating the driving route based on an order instruction; and
adjusting standby locations of the candidate vehicles based on historical order information.

10. The management method of the carbon emission management system (100) as claimed in claim 8, wherein the destination adding instruction is a consolidation instruction.

11. The management method of the carbon emission management system (100) as claimed in claim 7, comprising:
selecting the assigned vehicle based on available driving ranges of the candidate vehicles.

102

Route optimization
calculation module

104

Carbon emission
calculation module

106

Storage unit

100

FIG. 1

Calculate a driving route from a first destination to a second destination based on at least one of a vehicle type, a minimum driving distance, and a minimum driving time — S202

Calculate a total carbon emission of each candidate vehicle from a location thereof to an end of the driving route based on the driving route, carbon emission coefficients of the multiple candidate vehicles, and the locations thereof — S204

Select one of the multiple candidate vehicles as an assigned vehicle for driving the driving route based on the total carbon emission of each candidate vehicle — S206

FIG. 2

Adjust a standby location of a candidate vehicle based on historical order information — S302

Calculate a driving route from a first destination to a second destination based on at least one of a vehicle type, a minimum driving distance, and a minimum driving time — S202

Update the driving route based on a third destination added by a destination adding instruction — S304

Calculate a total carbon emission of each candidate vehicle from a location thereof to an end of the updated driving route based on the updated driving route, carbon emission coefficients of the multiple candidate vehicles, and the locations thereof — S306

Select one of the multiple candidate vehicles as an assigned vehicle for driving the driving route based on the total carbon emission and an available driving range of each candidate vehicle — S308

FIG. 3

# EUROPEAN SEARCH REPORT

**Application Number**

EP 24 22 3382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/062408 A1 (ANTEAM LTD [GB]) 28 March 2024 (2024-03-28) * abstract * * pages 3-4 * * pages 14-21 * ----- | 1-11 | INV. G06Q10/047 G01C21/34 |
| X | US 2023/059112 A1 (ITO YUTARO [JP]) 23 February 2023 (2023-02-23) * abstract * * paragraph [0026] * * paragraphs [0283] - [0296] * ----- | 1-11 | |

**TECHNICAL FIELDS SEARCHED (IPC)**

G06Q
G01C

The present search report has been drawn up for all claims

| Place of search | Date of completion of the search | Examiner |
|---|---|---|
| Munich | 27 May 2025 | Dedek, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3382

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | Publication date | Patent family member(s) | Publication date |
|---|---|---|---|
| WO 2024062408 A1 | 28-03-2024 | GB 2622771 A | 03-04-2024 |
| | | WO 2024062408 A1 | 28-03-2024 |
| US 2023059112 A1 | 23-02-2023 | CN 115708139 A | 21-02-2023 |
| | | DE 102022120730 A1 | 23-02-2023 |
| | | JP 2023028550 A | 03-03-2023 |
| | | US 2023059112 A1 | 23-02-2023 |

EPO FORM P0459

For more details about this annex : see Official Journal of the European Patent Office, No. 12/82